(19) Europäisches Patentamt

European Patent Office

Office européen des brevets

(11) Veröffentlichungsnummer: **0 280 759 B1**

# (12) EUROPÄISCHE PATENTSCHRIFT

(45) Veröffentlichungstag der Patentschrift: **13.10.93**

(51) Int. Cl.5: **H02H 3/02**, H02H 7/22, H01H 33/66

(21) Anmeldenummer: **87105308.8**

(22) Anmeldetag: **10.04.87**

(54) **Anordnung für elektrische Energieversorgungsleitungen zum Schutz gegen Explosionen von Gas- und/oder Staub-Luft-Gemischen, vorzugsweise des Untertagebetriebes.**

(30) Priorität: **06.03.87 DE 3707185**

(43) Veröffentlichungstag der Anmeldung:
**07.09.88 Patentblatt 88/36**

(45) Bekanntmachung des Hinweises auf die Patenterteilung:
**13.10.93 Patentblatt 93/41**

(84) Benannte Vertragsstaaten:
**DE ES FR GB**

(56) Entgegenhaltungen:
**DE-A- 2 734 498**
**DE-B- 1 144 378**
**DE-C- 1 463 574**
**GB-A- 1 196 418**
**US-A- 4 184 186**

(73) Patentinhaber: **Groh, Heinrich, Dr.**
**Riethstrasse 50**
**D-44536 Lünen(DE)**

(72) Erfinder: **Groh, Heinrich, Dr.**
**Riethstrasse 50**
**D-4670 Lünen 6(DE)**
Erfinder: **Zupfer, Helmut**
**Im Siepen 14**
**D-4600 Dortmund 16(DE)**

(74) Vertreter: **Herrmann-Trentepohl, Werner, Dipl.-Ing.**
**Schaeferstrasse 18**
**D-44623 Herne (DE)**

EP 0 280 759 B1

**Beschreibung**

Die Erfindung betrifft eine Anordnung für elektrische Energieversorgungsanlagen zur Verhinderung von Explosionen von Gas- und/oder Staub-Luft-Gemischen gemäß dem Oberbegriff des Patentanspruches 1.

Obwohl die Erfindung z.B. in der chemischen Industrie, wo ebenfalls aus unterschiedlichen Gasen bestehende explosive Gemische im Bereich von Energieversorgungsanlagen auftreten oder auch in der Mühlenindustrie, wo explosionsgefährliche Staub-Luft-Gemische im Bereich elektrischer Energieversorgungsanlagen angetroffen werden, verwendbar ist, wird sie im folgenden anhand ihres Hauptanwendungsgebietes näher beschrieben, das der Untertagebetrieb darstellt. Beispielsweise treten im Steinkohlenbergbau unter Tage explosionsfähige Methan-Luft-Gemische und Kohlenstaub-Luft-Gemische auf. Hierbei muß elektrische Energie auch unter äußeren Umständen übertragen werden, die mechanische Beschädigungen der Leitungen erwarten lassen. Das gilt beispielsweise für Schleppkabel von Walzenschrämladern im Abbau. Hierbei strebt man außerdem die Energieübertragung mit Hochspannung auch dort an, wo sie bislang aus Sicherheitsgründen ausgeschlossen und die Speisung mit Niederspannung zwingend vorgeschrieben ist. Die Vorteile der Hochspannungsenergie-Übertragung liegen in der guten Baustoffökonomie der Leitungen und Kabel.

Die Erfindung geht davon aus, daß die Steigerung der mechanischen Festigkeit der elektrischen Leitungen etwa durch mehrlagige Armierungen von Stahldraht als Leitungsschutz ihre natürliche Grenze einerseits in dem technischen Aufwand und der Handhabbarkeit, andererseits aber in der endlich großen Festigkeit findet, so daß eine hinreichend starke Beschädigungseinwirkung auf die Leitung deren Schutzfunktionen aufhebt. Soweit es sich im übrigen um das Hauptanwendungsgebiet der Erfindung handelt, kann von Drehstromnetzen mit Frequenzen zwischen 50 bis 60 Hz unter weitgehender Anwendung von Netzen mit ungeerdetem Sternpunkt ausgegangen werden.

Wird unter Tage das Auftreten explosionsfähiger Methan-Luft-Gemische erwartet, so setzt man bislang schlagwettergeschützte Betriebsmittel ein. Ihr Dauerbetrieb im explosionsgefährdeten Bereich ist in der Regel nicht zulässig. Vielmehr verlangen behördliche Vorschriften die Abschaltung schlagwettergeschützter Betriebsmittel bei Überschreitung eines festgelegten Methananteils an den Wettern, der deutlich unter der Explosionsgrenze liegt. Betriebliche Zwänge gestatten jedoch nicht, die Abschaltpflicht bei bestimmten Anlagen und Betriebsmitteln durchzuhalten. Das gilt für die Datenübertragung, die Meßwewrterfassung, insbesondere von Methan-Meßgeräten, die Beleuchtung, die Wasserhaltung, die Sonderbewetterung, sowie für Einrichtungen zur Brand- und Explosionsbekämpfung, aber auch für zahlreiche weitere Einrichtungen. Die Erfindung bezieht sich auch auf den Betrieb von elektrischen Anlagen unter derart ungünstigen Voraussetzungen.

Grundsätzlich dürfen elektrische Leitungen bei Beschädigung nicht zur Zündquelle eines Methan-Luft-Gemisches oder eines Kohlenstaub-Luft-Gemisches werden. Diese Gefahr entsteht vor allem durch mechanische Beschädigungen. Es ist bekannt, die gesetzten Bedingungen durch eigensichere Stromkreise zu erfüllen. Im Schlagwetter- und Explosionsschutz wird diese Schutzmaßnahme mit dem Kurzzeichen "i" bezeichnet und ist in zahlreichen Normen beschrieben. Ihre Grundlage ist die Begrenzung der elektrischen Werte in den elektrischen Stromkreisen, die Begrenzung gespeicherter Energie in Bauelementen und Leitungen, die Potentialtrennung eigensicherer von nichteigensicheren Stromkreisen, die Potentialtrennung eigensicherer Stromkreise untereinander und die Begrenzung der an Bauteilen und Betriebsmitteln auftretenden Temperaturen auf bestimmte Grenzwerte. Das letztere ist auch allen anderen Zündschutzarten gemeinsam.

In der gegenwärtigen Form sind mithin schlagwetter- und explosionsgeschützte elektrische Leitungen nur mit elektrischen Stromkreisen in der Zündschutzart "Eigensicherheit" - i - verwirklicht. Nachteilig ist die dadurch erzwungene Begrenzung elektrischer Werte, die den Anwendungsbereich auf die Zwecke der Datenübertragung und der Kommunikation sowie auf das Messen, Steuern und Regeln und auf bestimmte Bereiche der Beleuchtungstechnik beschränkt.

Aus der DE-B-1 144 378 ist eine Schutzeinrichtung für explosions- bzw. schlagwettergefährdete Betriebe bekannt, die bei Beschädigung eines Kabels zwischen Stromquelle und Verbraucher das Austreten von zündfähigen Funken unter allen Umständen verhindern soll. Dazu werden sowohl am Anfang wie auch am Ende des Kabels Schaltgeräte angeordnet, die die Stromquelle und den Verbraucher kurzschließen. Bei auftretenden Fehlern der Verbindungsleitung zwischen Stromquelle und Last werden Kurzschließer betätigt. Derartige Kurzschließer lassen sich nur mit Widerständen im Bereich unter 1 Milliohm bauen, so daß bei Kurzschluß entsprechend hohe Spannungsabfälle auftreten, die eine erhebliche Zündgefahr darstellen. Bei Kurzschlußströmen von mehreren $10^4$ A treten Spannungsabfälle von ca. 10 Volt auf. Da die verwendeten Verbindungsleitungen nur einen geringfügig höheren Widerstand im Vergleich zu den Kurzschließern aufweisen, fließt ein erheblicher Strom zur Fehlerstelle, welcher eine weitere Zündgefahr darstellt.

Der Erfindung liegt die Aufgabe zugrunde, eine Anordnung der eingangs bezeichneten Art zu schaffen, welche außerhalb des Bereiches der Eigensicherheit liegende elektrische Leitungen daran hindert, zur Zündquelle explosionsfähiger Gase, Dämpfe, Nebel oder Stäube zu werden.

Diese Aufgabe löst die Erfindung mit den Merkmalen des Patentanspruches 1. Zweckmäßige Ausführungsformen der Erfindung sind Gegenstand der hierauf zurückbezogenen Unteransprüche.

Die Erfindung ermöglicht im Fall der Beschädigung der Leitung die Sperrung jeder weiteren Energiezufuhr zur Fehlerstelle. Das geschieht von der Einspeisungsseite her und von dem lastseitigen Ende aus dann, wenn die Last reaktanzbehaftet ist (Motoren, Transformatoren, Kondensatorbatterien als Phasenschieber). Gemäß der Erfindung wird dazu mit Hilfe der schnellwirkenden Trennschalter und Kurzschließer ein Leitungsschutzsystem geschaffen, in dem der zu einer Fehlerquelle der Leitung abfließende Strom so schnell begrenzt und abgeschaltet wird, daß die Zündung eines Gas-, insbesondere Methan- bzw. Staub-Luft-Gemisches ausgeschlossen ist. Diese Fehlerquelle kann durch eine mechanische Beschädigung der Leitung, z.B. durch Quetschen oder Zerreißen de Leitung bzw. durch Eindringen eines Fremdkörpers hervorgerufen sein, sie kann aber auch aus einem Fehler der Isolation einzelner oder aller Leitungsadern, z.B. durch mangelnde Quer- und Längswasserdichtigkeit der Leitung, Fortschreiten der Isolationszerstörung durch Teilentladung bzw. sogenanntes watertreeing, entstanden sein.

Erfindungsgemäß wird die Fehlerquelle mit dem Erdschluß-Erfassungssystem festgestellt, welches jedoch derart schnell arbeitet, daß es anspricht, bevor ein Gas-Luft-Gemisch gezündet oder ein freigewordenes Leitungsende Stäube aufpeitschen und zünden kann oder ein elektrischer Lichtbogen entsteht.

Erfindungsgemäß dienen die schnellwirkenden Kurzschließer mit ihren Resistanzen vor Beginn des Trennvorganges, den die schnellwirkenden Trennschalter herbeiführen, zur Begrenzung des Spannungsabfalls an den Trennschaltern auf Spannungswerte unterhalb der Lichtbogenspannung. Da die Leitung zur Fehlerstelle induktionsarm ist - und das trifft für die Leitungen der Energietechnik zu -, öffnen die Trennschalter ohne Ionisation ihrer Schaltstrecken, wodurch die Lichtbogenbildung ausgeschlossen ist. Die Kurzschließer belasten mit ihren Resistanzen zwar das Netz und die beispielsweise von einem Motor gebildete Last mit dem jeweiligen Kurzschlußstrom, jedoch sind die Trennschalter so schnell, daß sie z.B. innerhalb einer Stromhalbschwingung öffnen. Dadurch kann die Ansteuerung der Kurzschließer auf diese Zeit begrenzt werden, so daß sie beim Stromnulldurchgang selbsttätig in den Sperrzustand übergehen.

Mit den Merkmalen des Patnetanspruches 2 gelingt es, einen mechanischen Trennschalter zu verwirklichen, der für die Zwecke der Erfindung ausreichend schnell ist. Das beruht im wesentlichen darauf, daß die Vakuumrohre und der Linearantrieb keine Kraftumlenkungen voraussetzen, welche im Ergebnis mit verlängerten Wegstrecken und damit Zeitverlusten verbunden sind. Die in dieser Ausführungsform der Erfindung vorgesehene mechanische Verklinkung hält den Trennschalter in geöffnetem Zustand, bis die Verklinkung gelöst worden ist.

Bei Verwirklichung der Ausführungsform der Erfindung nach dem Patentanspruch 3 erhält man einen Trennschalter, dessen Linearantrieb entweder nach Art und Wirkungsweise eines Transformators ausgebildet ist, wobei eine impulsstrombeaufschlagte Spule in einer Scheibe aus elektrisch leitfähigem Werkstoff als einwindige kurzgeschlossene Sekundärwicklung Ströme induziert, oder aus zwei impulsstrombeaufschlagten Spulen mit entgegengesetzt gerichtetem Magnetfeld besteht. Ein solcher Schalterantrieb ermöglicht eine gedrängte Bauweise bei hoher Schaltgeschwindigkeit und axiale Beschleunigungskräfte in der Größenordnung von zehn hoch fünf Newton (Anfangswert) bzw. zehn hoch vier Newton (Mittelwert).

Die mechanische Verklinkung eines solchen Trennschalters in der geöffneten Stellung muß entsprechend schnell und absolut zuverlässig wirken. Dieses Problem löst sich mit den im Patentanspruch 4 aufgeführten Mitteln, weil hierbei die als Riegel wirkenden Kugeln einerseits geringe Wegstrecken für die Verriegelung zurückzulegen haben und andererseits durch geringe Reibungskräfte die Antriebskraft des Linearantriebs nicht wesentlich reduzieren.

Mit der Ausführungsform nach dem Patentanspruch 5 werden die Linearantriebe aus Kondensatoren als Energiespeicher gespeist. Diese Art der Speisung ermöglicht die Optimierung des Antriebs dadurch, daß die Spule oder Spulen des Antriebs zusammen mit dem zugeordneten Kondensator einen Schwingkreis bilden, dessen Parameter zur Erzielung einer maximalen Beschleunigungskraft der Antriebe optimiert werden. Dieses Speiseverfahren der Linearantriebe ist außerdem unabhängig von den im Netz auftretenden Kurzschlußströmen.

Die Ausführungsform nach dem Patentanspruch 6 sieht die Kombination eines Trennschalters mit in Energieflußrichtung (bezogen auf den Fehlerfall) vorgeordnetem elektronischen Kurzschließer vor. Die Ansteuerung der Schaltelemente des Kurzschließers erfolgt auf induktivem Wege über die Speisekreise der Linearantriebe des Trennschalters, so daß bei Betätigung des Trennschalters der Kurzschließer zwangsläufig angesteuert wird und durch diese Zwangsläufigkeit önslichtbogenfreie öffnen der Trennschalterelemente und somit die unverzögerte Unterbrechung des Stromes über die Trennschalterelemente sichergestellt werden. Da der Trennschalter ausreichend kleine mechanische Eigenzeiten zum Erreichen seiner mechanisch verklinkten Endstellung mit geöffneten Schaltstrecken aufweist, läßt sich die Ansteuerung der Thyristoren des Kurzschließers auf eine kurze Zeitspanne begrenzen. Die Thyristoren bleiben bis etwa zum Stromnulldurchgang leitend und gehen dann selbsttätig in den Sperrzustand über. Die Dauer des durch den Kurzschließer verursachten Kurzschlußstromes liegt demzufolge mit etwa 10 bis 15 Millisekunden in der Größenordnung sogenannter strombegrenzender Schaltgeräte und um etwa den Faktor 5 unter der Abschaltzeit konventioneller Leistungsschalter. Kurzschließer und Trennschalter werden zweckmäßigerweise baulich zusammengefaßt.

Ein solcher Schalter läßt sich dann auch nach dem Patentanspruch 7 benutzen. Durch die zwangsläufige Ansteuerung der Schaltelemente des Kurzschließers, durch die zeitliche Begrenzung des leitenden Zustandes dieser Schaltelemente und durch die kurze mechanische Eigenzeit des Trennschalters erfüllt die Kombination Kurzschließer und Trennschalter die Forderungen, die an Leistungsschalter gestellt werden (Abschaltung von Kurzschlußströmen). Wegen des Wegfalls eines besonderen Leistungsschalters ergeben sich insbesondere unter beengten räumlichen Verhältnissen erhebliche Vorteile.

In der Ausführungsform nach Patentanspruch 8 ermöglicht die mit fremder Energie (elektrisch, pneumatisch, hydraulisch) betriebene und ferngesteuerte Einschaltvorrichtung des Trennschalters den Betrieb dieses Trennschalters als Schaltschütz.

Die Erdschlußerfassung in der Ausführungsform nach dem Patentanspruch 9 stellt eine Lösungsmöglichkeit für die im Bergbau weitgehend üblichen Drehstromsysteme mit ungeerdetem Sternpunkt dar. Jede mechanische Beschädigung verursacht nämlich einen zeitabhängigen, zu Beginn der Beschädigung reaktanzbehafteten, dann überwiegenden Ohm'schen Fehlerwiderstand zwischen einem oder mehreren Außenleitern und dem Schutzleiter. Diese Verschiebung der Spannungsverhältnisse erzeugt über Spannungswandler und einen Differentialtransformator bei gestörtem Netz drei Magnetflüsse, die im Differentialtransformator unsymmetrisch ausfallen. Der resultierende Magnetfluß liefert ein sekundäres Spannungssignal am Ausgang des Differentialtransformators.

Andererseits läßt sich erfindungsgemäß auch ein selektiver Schutz jeder Einzelleitung verwirklichen. Dazu dienen die im Patentanspruch 10 angegebenen Mittel. Hierbei werden an einem Leitungsende periodische, rechteckähnliche Impulse geeigneter Anstiegszeit und Impulsbreite eingespeist und, die hierbei empfangenen Echoimpulse fortlaufend mit den Echoimpulsen der unbeschädigten Leitung verglichen. Jede mechanische Beschädigung der Leitung sowie jeder durch Isolationsfehler entstehende Erdschluß bewirken eine Änderung des Wellenwiderstandes der betroffenen Leitungsader und damit eine Änderung der Struktur der Echogramme. Die Fehlerekennungszeit dieses Verfahrens läßt sich bis auf den Wert der doppelten Signallaufzeit über die gesamte Leitungslänge verkürzen. Dieser Wert ist gleichzeitig die Untergrenze für den Impulsabstand der eingespeisten rechteckähnlichen Impulse. Der Vorteil einer solchen Ausführung liegt im selektiven Schutz jeder einzelnen Leitung, die zu einem gemeinsamen Netzbezirk gehören.

Die Einzelheiten der Erfindung ergeben sich aus der nachfolgenden Beschreibung von Ausführungsbeispielen anhand der Figuren in der Zeichnung; es zeigen

Fig. 1    ein einphasiges Ersatzschaltbild eines netzgespeisten Motors mit fehlerbehafteter Leitung,

Fig. 2    ein Blockdiagramm eines kombinierten elektronischen Kurzschließers mit mechanischem Trennschalter,

Fig. 3    eine Erdschlußoüberwachung durch Differentialtransformator gemäß einer ersten Ausführungsform der Erfindung,

Fig. 4    ein Schaltbild der Erdschluß-Erkennungseinheit mit dem Differentialtransformator gemäß Fig. 3,

Fig. 5    einen mechanischen Trennschalter in einer Stirnansicht,

Fig. 6    den Gegenstand der Fig. 5 in Seitenansicht,

Fig. 7    den Gegenstand der Fig. 5 und 6 in einer Draufsicht,

Fig. 8    in vergrößertem Maßstab, im übrigen jedoch in der Fig. 6 entsprechender Darstellung die mechanische Verriegelung eines Trennschalters nach den Fig. 5 bis 7,

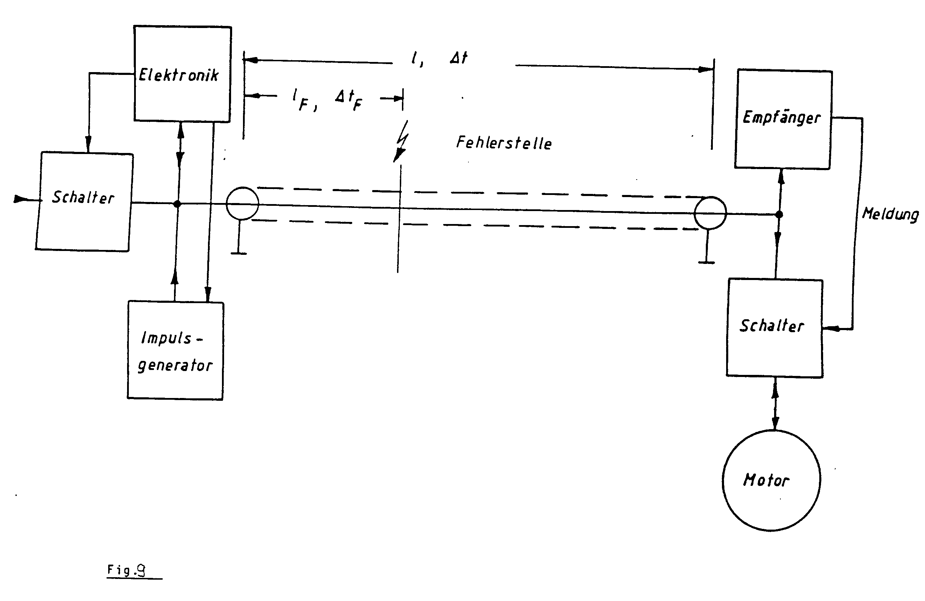

Fig. 9    ein Diagramm zur selektiven Erfassung von Fehlern auf Kabeln und Leitungen gemäß einer zweiten Ausführungsform der Erfindung,

Fig. 10   Funktionsbeschreibung der Einrichtung gemäß Fig. 9.

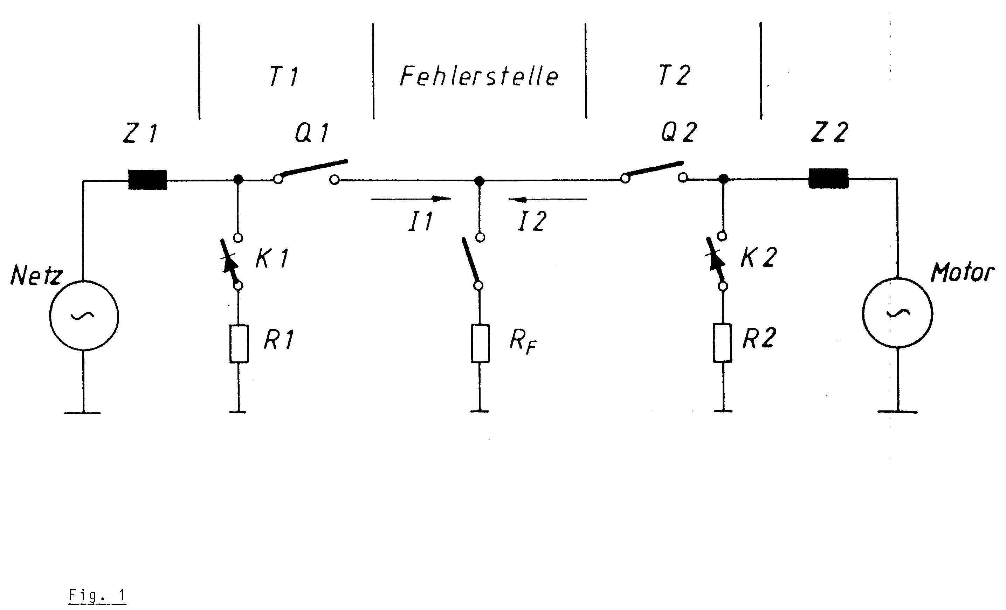

In der Darstellung der Fig. 1 speisen ein Netz mit der inneren Impedanz (Z1) und ein Motor mit (Z2) gemeinsam auf eine Fehlerstelle (RF). Die Lichtbogenbildung an den Schaltstrecken der Trennschalter (Q1 und Q2) kann dann verhindert werden, wenn die elektronischen Kurzschließer (K1 und K2) mit ihren Resistanzen (R1 und R2) vor Beginn des Trennvorganges in (Q1 und Q2) den Spannungsabfall an (Q1 und Q2) auf wenige Volt begrenzen. Ist die Leitung zur Fehlerstelle induktionsarm, was auf den vorliegenden Fall zutrifft, so öffnen (Q1 und Q2) ohne Ionisation der Schaltstrecke und damit ohne Lichtbogenbildung. Die Kurzschließer (K1 und K2) mit ihren Resistanzen (R1 und R2) belasten Netz und Motor mit dem jeweiligen Kurzschlußstrom. Wenn die Trennschalter (Q1 und Q2) ausreichend schnell sind, z.B. innerhalb einer Stromhalbschwingung öffnen, so kann die Ansteuerung von Thyristoren, die in den Kurzschließern (K1 und K2) enthalten sind, auf diese zeitbegrenzt werden, d.h. es genügt, die Thyristoren zu zünden. Sie gehen selbsttätig in den Sperrzustand über, wenn der Haltestrom unterschritten wird.

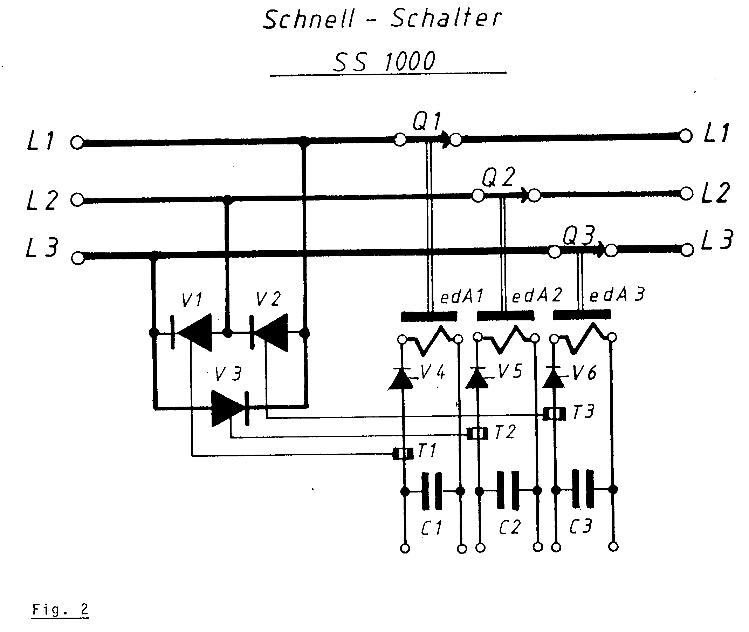

Die Dauer des Kurzschlußstromes liegt etwa in der Größenordnung strombegrenzender Schaltgeräte und ist um etwa den Faktor 5 kleiner als bei konventionellen Leistungsschaltern. Kurzschließer (K1, K2) und Trennschaltstrecken (Q1, Q2) werden zu Schnellschaltern (T1 und T2) baulich zusammengefaßt. Einen solchen Trennschalter zeigt Fig. 2. Er besteht aus den drei Thyristoren (V1, V2 und V3) in Dreieckschaltung und den nachgeschalteten Vakuumschaltrohren (Q1, Q2 und Q3). Die Schaltrohre werden durch elektrodynamische Linearantriebe (ed A1, ed A2 und ed A3) geöffnet, wobei sich die Kondensatoren (C1, C2 und C3) über Thyristoren (V4, V5 und V6) auf die Antriebsspulen der Linearantriebe entladen. Eine aus elektrisch leitendem Werkstoff bestehende Scheibe wird - als "Kurzschlußring" - von der Spule aus beschleunigt und dient als Schaltrohrantrieb. Die abstoßende Kraft liegt in der Größenordnung von zehn hoch fünf Newton (Anfangswert) bzw. zehn hoch vier Newton als Mittelwert.

Über die induktiven Wandler (T1, T2 und T3) erfolgt die Zündung der Thyristoren (V1 bis V3) durch den Entladestrom der Linearantriebe (bzw. durch dessen zeitliches Differential).

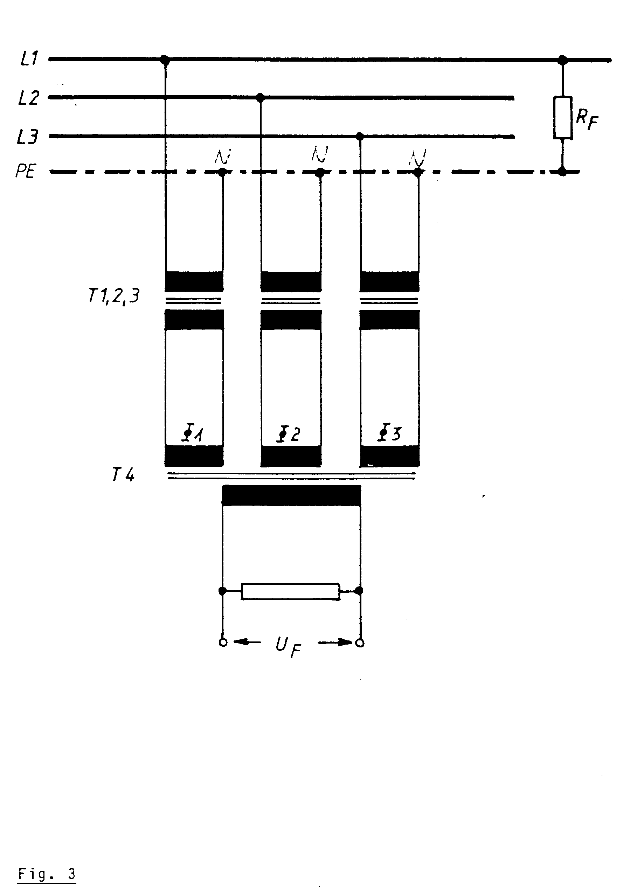

Die Fig. 3 zeigt eine Leitungsüberwachung für ein symmetrisches Drehstromsystem mit ungeerdetem Sternpunkt (N). Betriebsmäßig zeigt ein solches System gleich große Spannungen zwischen (N) und den Außenleitern (L1, L2 und L3). Bei der mechanischen Beschädigung tritt ein Ohm'scher Fehlerwiderstand (RF) zwischen einem oder mehreren Außenleitern und dem Schutzleiter (PE) auf. Damit nehmen die Außenleiter (L1, L2 und L3) ungleiche Spannungen gegen (PE) an. In dem Schaltbild gemäß Fig. 3 führt diese Verschiebung der Spannungsverhältnisse im fehlerbehafteten Drehstromsystem zu einem elektrischen Signal.

Über die Spannungswandler (T1, T2 und T3) wird ein Abbild des Drehstromsystems geschaffen, das im Differentialtransformator (T4) bei ungestörtem Netz drei Magnetflüsse ($\phi 1$, $\phi 2$, $\phi 3$) erzeugt, deren resultierender Magnetfluß Null ist. Damit führt die Sekundärklemme an (T4) die Spannung Null. Bei einem Fehler, der beispielsweise zwischen (L1 und PE) angenommen ist, entstehen unsymmetrische Magnetflüsse in (T4). Ihre Summe ergibt einen von Null abweichenden resultierenden Magnetfluß und demzufolge an (T4) ein sekundärseitiges Spannungssignal (UF).

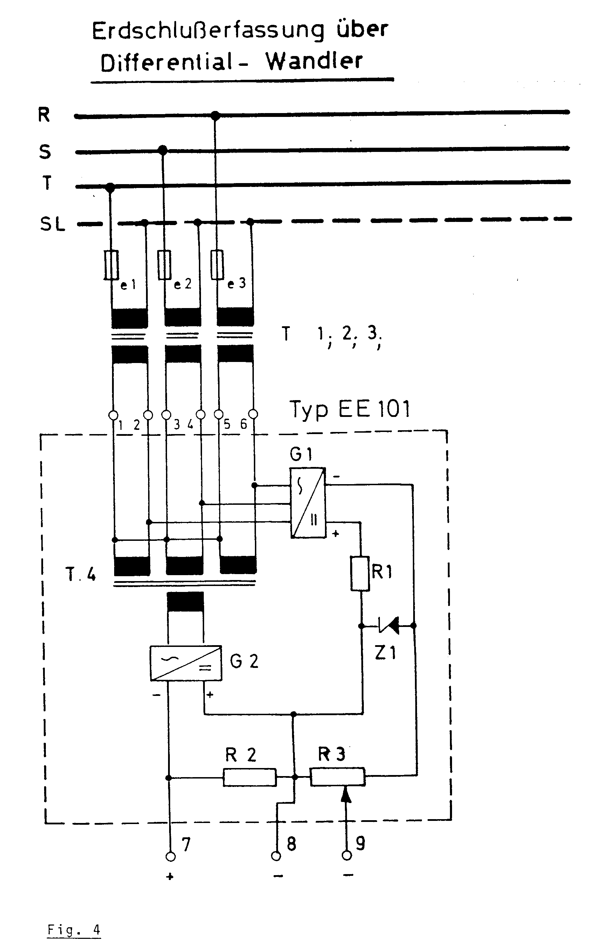

Eine Erdschluß-Erkennungseinheit ist in Fig. 4 wiedergegeben. Sie arbeitet nach dem vorstehend im Zusammenhang mit der Erläuterung der Fig. 3 beschriebenen Prinzip mit einem durch Spannungswandler (T1 bis T3) gespeisten Differentialtransformator (T4), dessen resultierender Magnetfluß bei ungestörtem Netz Null ergibt. Bei fehlerbehaftetem Netz erzeugt der von Null verschiedene Magnetfluß in (T4) über die Graetz-Brücke (G2) ein Spannungssignal.

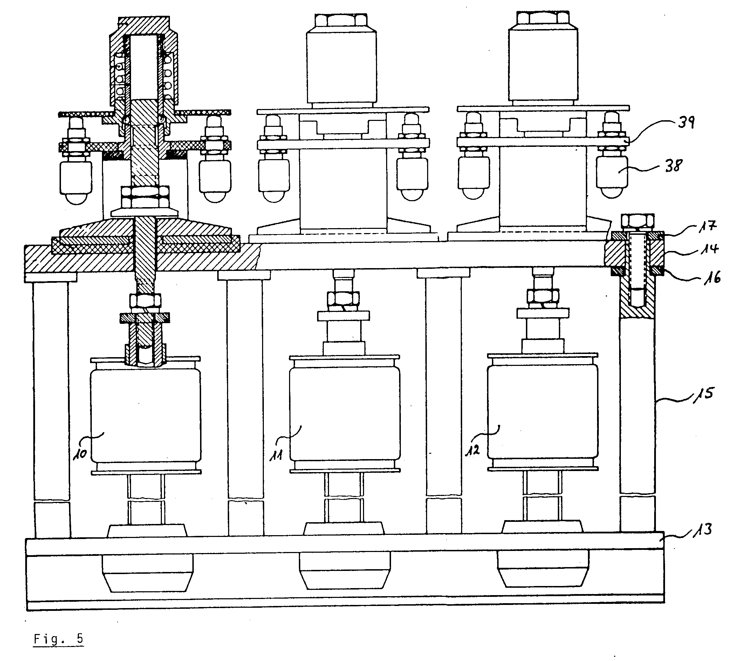

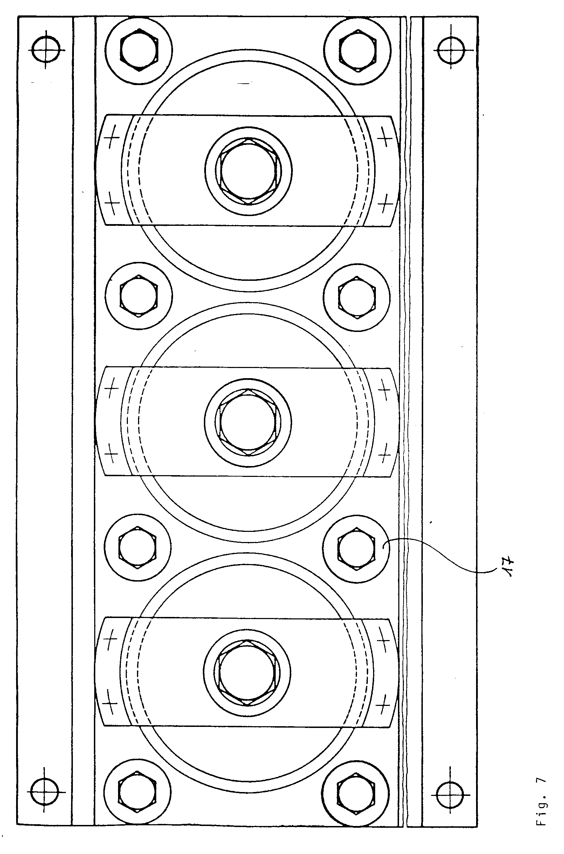

In den Fig. 5 bis 8 ist ein mechanischer Trennschalter der vorstehend beschriebenen Art mit seinen Einzelheiten wiedergegeben.

Die drei Vakuumröhren (10 bis 12) sind zwischen einer Grundplatte (13) und einer Zwischenplatte (14) angeordnet. Distanzbolzen, wie z.B. bei (15) dargestellt, halten über Distanzringe (16 und 17) die Zwischenplatte (14). Für jeden Außenleiter des Drehstromsystems ist eine Vakuumröhre vorgesehen. Die zugeordneten Teile sind in allen drei Fällen identisch.

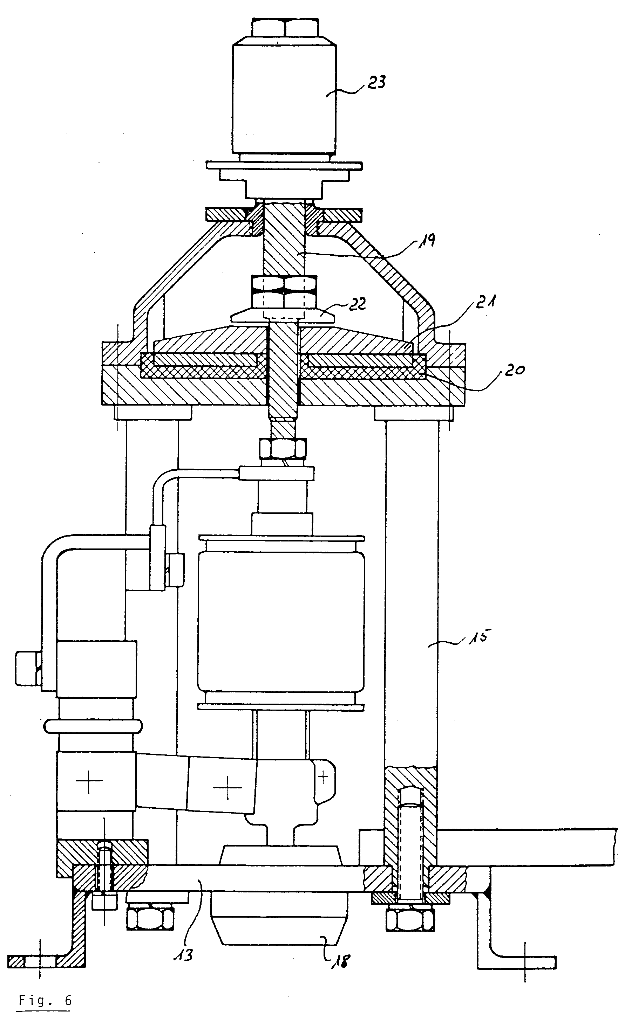

Wie Fig. 6 zeigt, wird die betreffende Vakuumröhre auf der Grundplatte (13), wie bei (18) dargestellt, gehalten. Ein Schaltgestänge (19) durchsetzt einen Trafo, welcher eine Primärwicklung (20) aufweist. Die Sekundärwicklung des Trafos besteht aus der Scheibe (21), welche über eine Mutter (22) auf das Schaltgestänge (19) wirkt.

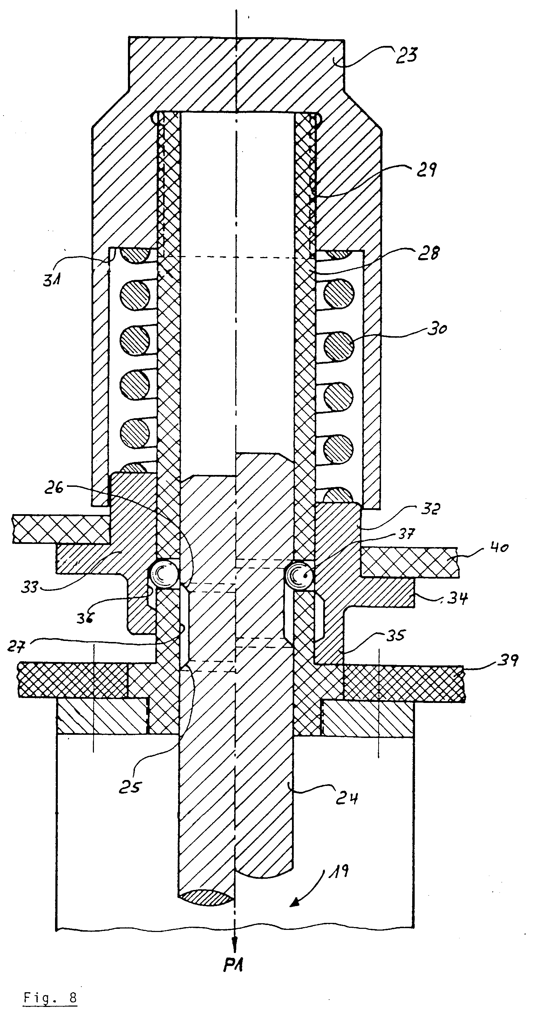

Unter einer Abdeckkappe (23) befindet sich eine mechanische Verriegelung, welche den Schalter in Offenstellung hält. Die Einzelheiten sind aus der Darstellung der Fig. 8 ersichtlich, welche im linken Teil den Ausgangszustand des Schalters bei geschlossenen Kontakten und im rechten Teil den geöffneten Schalter wiedergibt.

Danach ist das obere Ende des Schaltgestänges (19) eine im Querschnitt runde Stange (24), welche eine bei (25 und 26) wiedergegebene Abfasung einer zylindrischen Aussparung (27) aufweist. Mit diesem Teil läuft die Stange (24) in einer Hülse (28), deren oberes Ende mit einem Gewinde (29) für die Abdeckkappe (23) versehen ist. Die Hülse wird von einer Wendelfeder (30) umgeben, die sich mit ihrem oberen Ende an der Innenseite (31) der Kappe (23) abstützt und mit ihrem unteren Ende den oberen zylindrischen Teil (32) eines Sperringes (33) belastet. Der Ring weist einen Flansch (34) auf, der den oberen zylindrischen Teil (32) von einem unteren zylindrischen Abschnitt (35) trennt.

In diesem Abschnitt hat der Ring eine innenzylindrische Aussparung (36) zur Aufnahme von Kugeln (37), die als Sperrkörper dienen. Der Flansch dient zur Axialverschiebung eines Betätigungsringes (40), mit dem Hilfsschalter (38) betätigt werden können, welche auf einer Befestigungsplatte (39) sitzen.

Die in den Fig. 6 und 8 beschriebene Verriegelung funktioniert wie folgt: Im geschlossenen Zustand des Schalters liegen die Kugeln (37) oberhalb der zylindrischen Ausdrehung (27) der Stange (24). Sobald der Linearantrieb das Schaltgestänge (19) nach oben beschleunigt, werden die Kugeln (37) infolge der Aussparung (36) und der vorgespannten Feder (30) nach innen geführt, bis sie über die Fase (26) in die Aussparung (27) geraten. Dadurch wird der Sperring (33) freigelgeben, den die sich entspannende Spiralfeder (30) nach unten führt, wodurch die Kugeln (37) in der Ausdrehung (27) der Stange (24) gehalten werden. Dadurch kann die Stange (24) bei fehlender Antriebskraft nicht mehr nach unten zurückgeführt werden.

Der Schalter läßt sich schließen, sobald über den Flansch (34) der Sperring (33) nach oben unter gleichzeitigem Zusammendrücken der Spiralfeder (30) gepreßt wird. Das kann manuell, aber auch elektrisch, pneumatisch oder hydraulisch erfolgen.

Ein Fehlerortungsgerät, bestehend aus einem Impulsgenerator und einer Auswerteeinheit, im folgenden als Elektronik bezeichnet, überwacht am netzseitigen Ende kontinuierlich eine im Betrieb befindliche Leitung. Mechanische Beschädigungen (z.B. eindringende Fremdkörper) der Leitung führen bei einzeln konzentrisch geschirmten Leitungsadern zunächst zur Änderung des Wellenwiderstandes der betroffenen Ader zusammen mit dem Schirm. Aus der Abweichung des Echogramms folgt der Abschaltbefehl zum netzseitigen Leitungsschutzschalter. Lastseitig erfolgt die Meldung von einem Empfänger zum dortigen Leitungsschutzschalter. Da Steuerleitungen zwischen Netz- und Lastseite nicht verwendet werden sollen, muß der lastseitige Empfänger den Abschaltbefehl aus einer geeigneten Codierung der netzseitig eingespeisten Impulse gewinnen. Eine Möglichkeit hierzu ist die Polaritätsumkehr der vom Impulsgenerator emittierten Impulse nach Detektion des fehlerhaften Zustandes.

Die Impulsrate der Ortungsimpulse sollte möglichst über 10 kHz liegen, so daß maximal 100 mü zur Erkennung/Meldung eines Fehlers benötigt werden. Umgekehrt stellt die doppelte Signallaufzeit auf der Leitung die Untergrenze für den Abstand der Sendeimpulse dar.

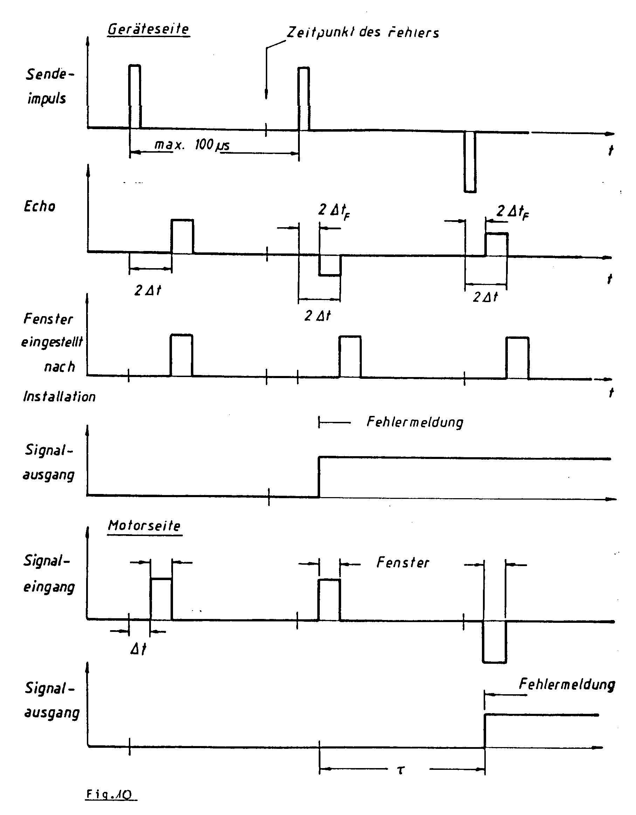

Die Ansteuerung des lastseitigen Empfängers ist schematisch in Fig. 10 dargestellt. Das netzseitig installierte ("Geräteseite") Fehlerortungsgerät speist mit 10 kHz positive Impulse ein; nach Reflexion am hochfrequenzmäßig offenen Leitungsende erscheint das Echo nach doppelter Signallaufzeit t am Fehlerortungsgerät mit positiver Polarität. Tritt ein Fehler ein, z.B. als Schluß Ader-Schirmung, erreicht das Echo das Fehlerortungsgerät nach der Zeit 2 x t < 2 x t; außerdem wechselt das Echo seine Polarität. Bei intakter Leitung treten Echoimpulse nur zu bestimmten Zeiten (2 x t nach dem Sendeimpuls) auf.

Werden nach der Installation entsprechende Zeitfenster vorgesehen, fallen die Echoimpulse in diese Zeitfenster. Außerhalb dieser Zeitfenster liegende Echoimpulse signalisieren Fehler auf der Leitung.

Das Fehlerortungsgerät gewinnt aus diesem Sachverhalt die Entfernung zum Fehler, steuert gleichzeitig den netzseitigen Leitungsschutzschalter an und wechselt die Polarität der Sendeimpulse (wodurch alle weiteren Echosignale mit positiver Polarität eintreffen). Der lastseitige Empfänger ("Motorseite") empfängt bei intakter Leitung die positiven Sendeimpule (mit einem Zeitverzug von t = Signallaufzeit auf der Leitung). Die Polaritätsumkehr dieser Signale nach Eintritt des Fehlers erkennt der Empfänger und steuert seinerseits den lastseitigen Leitungsschutzschalter an. Da die beschädigte Ader keine Signale überträgt, muß diese Information aus den Signalen der noch intakten Leitungsadern gewonnen werden, was bei Drehstromsystemen i.a. immer möglich sein wird. Zur Erhöhung der Unanfälligkeit gegenüber Störsignalen negativer Polarität kann empfängerseitig ein synchronisiertes Zeitfenster gesehen werden (Zeitversatz zum Sendeimpuls: t). Nur Polaritätssprünge innerhalb dieses Zeitfensters oder auch das Fehlen eines positiven Impulses innerhalb des Zeitfensters werden dann als Auslösekriterium erkannt.

Beschädigungen einer Leitung bzw. deren Isolationsfehler bewirken einen Sprung im Wellenwiderstand und können auch aus dem laufenden Vergleich der Struktur der Echogramme bei intakter und beschädigter Leitung erkannt werden. Dabei muß das nach Installation - bei nachgewiesenermaßen intakter Leitung - aufgenommene Echogramm ausfallsicher dem Fehlerortungsgerät eingespeichert werden.

**Patentansprüche**

1. Anordnung für elektrische Energieversorgungsleitungen zur Verhinderung von Explosionen von Gas- und/oder Staub-Luft-Gemischen, vorzugsweise des Untertagebetriebes, wobei die Versorgungsleitung ein Stromnetz mit einer Last verbindet, und wobei zwischen Stromnetz und Versorgungsleitung und bei reaktanzbehafteter Last auch zwischen Versorgungsleitung und Last Trennschalter angeordnet sind, dadurch gekennzeichnet, daß die Trennschalter schnell wirkende Trennschalter (Q1, Q2) sind, die zur Begrenzung des Spannungsabfalls auf der Trennschaltstrecke mit jeweils einem schnell wirkenden Kurzschließer (K1, K2), welcher bei einem Leitungsfehler in Energieflußrichtung gesehen vor dem Trennschalter (Q1, Q2) angeordnet ist, zusammenwirkt, und daß ein Erdschlußerfassungssystem vorgesehen ist, das zum Ansteuern des netzseitigen Trennschalters (Q1) und bei reaktanzbehafteter Last auch des lastseitigen Trennschalters (Q2) zusammen mit den Kurzschließern (K1, K2) dient.

2. Anordnung nach Anspruch 1, dadurch gekennzeichnete, daß der Trennschalter (Q1, Q2) als Vakuumröhren (10 bis 12) ausgebildete Schaltelemente mit einem elektrischen Linearantrieb (20 bis 22) und eine mechanischen Verklinkung (23 bis 38) aufweist.

3. Anordnung nach einem der Ansprüche 1 bis 2, dadurch gekennzeichnet, daß der Linearantrieb entweder als Transformator (20, 21) ausgebildet ist, der von einer impulsstrombeaufschlagten Spule (20) und einem Kurzschlußring (21) gebildet wird, oder aus einem Paar impulsstrombeaufschlagter Spulen (20, 21) besteht.

4. Anordnung nach einem der Ansprüche 1 bis 3, dadurch gekennzeichnet, daß zur Verklinkung des Trennschalters bei geöffneten Trennschalterkontakten auf eine ausgesparte Kontaktstange (24) wirkende Kugeln (37) vorgesehen sind, welche unter gemeinsamer Federvorspannung stehend auf der Kontaktstange (24) abgestützt sind und bei deren Betätigung mit dem Linearantrieb (20 bis 22) in deren Aussparung (27) einfallen.

5. Anordnung nach einem der Ansprüche 1 bis 4, dadurch gekennzeichnet, daß zum Betrieb der elektrodynamischen Linearantriebe (ed A1, ed A2, ed A3) des Trennschalters Kondensatoren (C1, C2, C3) dienen, die über ihnen zugeordnete Thyristoren (V4, V5, V6) auf die Spulen der Linearantriebe entladen werden.

6. Anordnung nach einem der Ansprüche 1 bis 5, dadurch gekennzeichnet, daß der Kurzschließer drei Thyristoren (V1, V2, V3) in Dreieckschaltung aufweist, die über induktive Wandler (T1, T2, T3) vom Entladestrom der Kondensatoren (C1, C2, C3) zwangsläufig gezündet werden.

7. Anordnung nach einem der Ansprüche 1 bis 6, dadurch gekennzeichnet, daß die schnellwirkenden Trennschalter (Q1, Q2) und Kurzschließer (K1, K2) als Leistungsschalter bei fehlendem vorgeordneten Leistungsschalter dienen.

8. Anordnung nach einem der Ansprüche 1 bis 7, dadurch gekennzeichnet, daß die Trennschalter (Q1, Q2) einen Antrieb aufweisen, der als Einschaltvorrichtung dient, und daß die Trennschalter (Q1, Q2) mit Einschaltvorrichtung, soweit sie mit Hilfe fremder Energie (elektrisch, pneumatisch, hydraulisch) betrieben wird, ein nachgeordnetes Schaltschütz ersetzen.

9. Anordnung nach einem der Ansprüche 1 bis 8, dadurch gekennzeichnet, daß als Erdschluß-Erfassungssystem Spannungswandler (T1, T2, T3), welche einzeln den Außenleitern (L1, L2, L3) eines symmetrischen Drehstromsystems mit ungeerdetem Sternpunkt (N) zugeordnet sind, und ein Differentialtransformator (T4) dienen.

10. Anordnung nach einem der Ansprüche 1 bis 8, dadurch gekennzeichnet, daß als Erdschluß-Erfassungssystem Echogramme von Impulsen geeigneter Anstiegszeit und Impulsbreite dienen, die zum Zwecke der Überwachung jedem einzelnen Außenleiter (L1, L2, L3) des Drehstromsystems fortlaufend während des Betriebes der Last aufgeprägt werden, wobei der Impulsabstand nicht geringer als die doppelte Impulslaufzeit auf dem jeweiligen Kabel gewählt ist.

## Claims

1. Arrangement for electrical power cables to prevent explosions of gas-air and/or dust-air mixtures, preferably in underground mining; the cable connecting a power network to a load in such a way, that isolating switches are installed between power network and electrical cable, and, in the case of a reactive load, additionally between electrical cable and said load, characterised in that said isolating switches are quick-acting isolating switches (Q1, Q2), each combined - in order to limit the voltage drop across the switching gap - with a quick - acting short-circuit switch (K1, K2) in such a way, that said short-circuit switch is positioned ahead of the isolating switch (Q1, Q2) with respect to the direction of electric power flow in the case of a cable fault;
an earth-fault detection system is installed, acting as a trigger of the isolating switch (Q1) on the network side, and, in the case of reactive load, additionally acting as a trigger of the isolating switch (Q2) on the load side, combined with said short-circuit switches (K1, K2).

2. Arrangement according to Claim 1, characterised in that said isolating switch (Q1, Q2) comprises vacuum tubes (10 to 12) as switching elements with an electric linear propulsion system (20 to 22) and a mechanical latch (23 to 38).

3. Arrangement according to one of the Claims 1 to 2, characterised in that said linear propulsion system is designed either as a transformer (20, 21) comprising a pulse current impinged coil (20) and an short-circuit disc (21) or as a pair of pulse current impinged coils (20, 21).

4. Arrangement according to one of the Claims 1 to 3, characterised in that the mechanical latch of said isolating switch in the open-position is caused by balls (37) acting on the recess of a switching rod (24);
said balls (37) commonly impinged by a spring force and supported by said switching rod (24), and, when operating said switching rod (24) by said linear propulsion system (20 to 22), said balls (37) fall into said recess (27) of the switching rod.

5. Arrangement according to one of the Claims 1 to 4, characterised in that said electrodynamic linear propulsion systems (ed A1, ed A2, ed A3) of said isolating switch are operated by capacitors (C1, C2, C3) which are discharged by co-related thyristors (V4, V5, V6) onto said coils of the linear propulsion systems.

6. Arrangement according to one of the Claims 1 to 5, characterised in that said short-circuit switch comprises three delta-connected thyristors (V1, V2, V3) automatically triggered by the discharge current of said capacitors (C1, C2, C3) by way of inductive current transformers (T1, T2, T3).

7. Arrangement according to one of the Claims 1 to 6, characterised in that said quick-acting isolating switches (Q1, Q2) and said short-circuit switches (K1, K2) operate as a circuit breaker in the case of a missing circuit-breaker positioned ahead of said switches.

8. Arrangement according to one of the Claims 1 to 7, characterised in that said isolating switches (Q1, Q2) comprise a drive operating as a circuit closer, and that said isolating switches (Q1, Q2) with said drive replace a backward contactor as far as they are actuated by means of an external power (electric, pneumatic, hydraulic).

9. Arrangement according to one of the Claims 1 to 8, characterised in that voltage transformers (T1, T2, T3), each co-related to one of the conductors (L1, L2, L3) of a symmetrical three phase system with isolated neutral (N), and a differential transformer (T4) work as an earth fault detection system.

10. Arrangement according to one of the Claims 1 to 8, characterised in that echos of electric pulses with suitable rise-time and pulse width work as an earth fault detection system;
for monitoring these said pulses are continously fed into each conductor (L1, L2, L3) of said three phase system during the operational time of the load;
the time separation of said pulses is chosen not smaller than twice the pulse time delay on said electric power cable.

**Revendications**

1. Disposition pour des câbles d'alimentation électrique, afin d'empêcher des explosions de mélanges gaz-air et/ou poussière-air, de préférence dans un fonctionnement au fond, où le câble d'alimentation relie un réseau de distribution avec une charge, et où entre réseau et câble d'alimentation et, dans le cas d'une charge reactive, entre câble d'alimentation et charge, ils existent également des sectionneurs, caractérisée an ce que les sectionneurs sont des sectionneurs à action rapide (Q1, Q2), agissant de concert - pour limiter la chute de tension sur la distance de sectionnement - avec un contact respectif de court-circuit à action rapide (K1, K2), lequel dans le cas d'un défaut de câble est disposé dans le sens de circulation de l'énergie électrique en amont du sectionneur (Q1, Q2), et qu'un système de détection de mise à la terre est prévu pour la commande du sectionneur de réseau (Q1) et, dans le cas d'une charge reactive, il commande également le sectionneur côté-charge (Q2) agissant de concert avec les contacts de court-circuit (K1, K2).

2. Disposition selon la revendication 1 caracterisée en ce que le sectionneur (Q1, Q2) dispose d'éléments de commutation réalisés en tube à vide (10 jusqu'à 12) avec une traction linéaire à commande électrique (20 jusqu'à 22) et un encliquetage mécanique (23 jusqu'à 38).

3. Disposition selon l'une des revendications 1 à 2 caracterisée en ce que la traction linéaire est soit réalisée par un transformateur (20, 21) qui est constitué d'une bobine à courant pulsé (20) et d'une baque de court-circuit (21) ou soit d'une paire de bobines à courant pulsé (20, 21).

4. Disposition selon l'une des revendications 1 à 3 caracterisée en ce qu'une barre de contact évidée (24) agissant de concert avec des billes (37) prévues pour l'encliquetage du sectionneur en cas d'ouverture des contacts du sectionneur. Ces billes qui sont soumises à la précontrainte du ressort s'appuyant sur la barre de contact (24) et qui lors de son actionnement à l'aide d'une traction linéaire (20 jusqu'à 22) va se loger dans sa partie évidée.

5. Disposition selon l'une des revendications 1 à 4 caracterisée en ce que des condensateurs (C1, C2, C3) sont utilisés pour manoeuvrer les tractions linéaires à commande électrodynamique (ed A1, ed A2, ed A3) du sectionneur. Ces condensateurs se déchargent sur les bobines des tractions linéaires à travers leurs thyristors correspondants (V4, V5, V6).

6. Disposition selon l'une des revendications 1 à 5 caracterisée en ce que le contact de court-circuit contient trois thyristors (V1, V2, V3) à connexion en delta et qui sont obligatoirement amorcés par le courant de décharge des condensateurs (C1, C2, C3) à travers des convertisseurs (T1, T2, T3).

7. Disposition selon l'une des revendications 1 à 6 caracterisée en ce que les sectionneurs à action rapide (Q1, Q2) et les contacts de court-circuit (K1, K2) servent comme disjoncteur dans le cas où le disjoncteur en amont est manquant.

8. Dispositon selon l'une des revendications 1 à 7 caracterisée en ce qu'une traction est contenue dans les sectionneurs (Q1, Q2) qui sert d'appareil d'enclenchement et que les sectionneurs (Q1, Q2) remplacent un contacteur en aval, mais seulement si leur mécanisme d'enclenchement est alimenté par une énergie extérieure (électrique, pneumatique, hydraulique).

9. Disposition selon l'une des revendications 1 à 8 caractérisée en ce que les convertisseurs de tension (T1, T2, T3) raccordés a un système symétrique à courant triphasé avec un conducteur neutre (N) non mis à la terre avec les lignes (L1, L2, L3) et le transformateur differentiel (T4) servent comme système de détection de mise à la terre.

10. Disposition selon l'une des revendications 1 à 8 caractérisée en ce que les échogrammes d'impulsions avec d'un temps de montée approprié et une largeur d'impulsions appropriée servent comme système de détection de mise à la terre. Ces impulsions qui servent à la surveillance sont continuellement imprégnées dans chaque ligne (L1, L2, L3) du système à courant triphasé de la charge du réseau. L'écart entre deux impulsions doit être choisi de telle façon que cet écart soit supérieur au double de la durée de transmission d'une impulsion sur le câble soumis à la surveillance.

T1     Fehlerstelle     T2

Fig. 1

EP 0 280 759 B1

Schnell - Schalter

SS 1000

Fig. 2

EP 0 280 759 B1

Fig. 3

# Erdschlußerfassung über Differential- Wandler

Fig. 4

Fig. 5

Fig. 6

EP 0 280 759 B1

Fig. 7

16

Fig. 8

Elektronik

Schalter

Impulsgenerator

$l$, $\Delta t$

$l_F$, $\Delta t_F$

Fehlerstelle

Empfänger

Meldung

Schalter

Motor

Fig.9

EP 0 280 759 B1

Fig. 10